# EUROPEAN PATENT SPECIFICATION

(11) **EP 1 555 279 B1**
(45) Date of publication and mention of the grant of the patent: **19.05.2010**
(21) Application number: 03756731.0
(22) Date of filing: 21.10.2003
(51) Int. Cl.: C08G 69/44

(54) **NONCRYSTALLINE, WHOLLY AROMATIC POLYESTERAMIDE**
NICHTKRISTALLINES, VOLLAROMATISCHES POLYESTERAMID
POLYESTERAMIDE ENTIEREMENT AROMATIQUE NON CRISTALLIN

(30) Priority: 21.10.2002 JP 2002305712
(43) Date of publication of application: 20.07.2005
(73) Proprietor: Polyplastics Co., Ltd., Tokyo 108-8280 (JP)
(72) Inventor: NAKANE, Toshio, c/o Polyplastics Co., Ltd., Fuji-shi, Shizuoka 416-8533 (JP); YOKOTA, Toshiaki, c/o Polyplastics Co., Ltd., Fuji-shi, Shizuoka 416-8533 (JP); SAKAMOTO, Katsutoshi, c/o Polyplastics Co., Ltd., Fuji-shi, Shizuoka 416-8533 (JP); SHIWAKU, Toshio, c/o Polyplastics Co., Ltd., Fuji-shi, Shizuoka 416-8533 (JP)
(74) Representative: Peel, James Peter
(86) International application number: PCT/JP2003/013435
(87) International publication number: WO 2004/035659

(56) References cited:
- EP-A- 0 063 880
- EP-A- 0 376 323
- EP-A- 0 450 932
- JP-A- 57 177 019
- JP-A- 63 191 824

## Description

### Field of the Invention

The present invention relates to an amorphous wholly aromatic polyester amide, which is used for a multilayer film or a multilayer sheet, a multilayer blow molded article and the like.

### Prior arts

A liquid crystalline polymer has excellent flowability, mechanical strength, heat resistance, chemical resistance and electric properties in a well-balanced state and, therefore, is suitably and widely used as high performance engineering plastics. Most of them are mainly obtained by injection molding.

According to recent remarkable advance in industry, application of such liquid crystalline polymer is apt to cover a lot of ground, be more leveled up and specified. The liquid crystalline polymer has been expected to be blow molded and processed efficiently and economically, while making good use of its gas transmission resistance, by blow molding or melt stretch forming to provide hollow molded articles, film or sheet, and fiber while keeping its excellent physical properties. For example, among automobile parts, a fuel tank and various pipes are required to be of low gasoline transmission and further high-level mechanical properties, therefore conventionally they are in a field where only products made of metal are used. However, the metal parts are being replaced with plastic ones for the purpose of weight reduction, rustproof and processing cost reduction. Thus, it is desired to obtain them by blow molding of a liquid crystalline polymer having above described excellent properties.

However, although liquid crystalline polymer has excellent flowability and mechanical properties, generally it is low in melt viscosity and tensile strength in a molten state, which are the most important properties for adopting a blow molding method, to make obtaining a molded article in a desired figure by blow molding method almost impossible. As an improved method, a method using a highly polymerized polyester resin having high intrinsic viscosity, a method using a branched polyester resin, and further a method adding various fillers are proposed. But all of the resulted materials show a little improvement effect and they are insufficient as a material for such processing methods.

On the other hand, for the purpose of improving blow moldability and the like, various liquid crystalline polyester amides obtained by copolymerizing amino compound have been proposed (JP-A 57-177019, JP-A 61-239013, JP-A 63-191824, JP-A 5-170902, JP-A 2001-200034). But it has been found out by the present inventor's additional tests that, although these conventionally proposed liquid crystalline polyester amides represent a certain level of good physical properties and may be used for fiber and blow molded articles, there is a problem that they are sometimes insufficient in stretching property and unsatisfactory in adhesion to a heterogeneous polymer, and that they may be substantially impossible to be used particularly for a multilayer film or sheet, a multilayer blow molded article, and the like.

EP 0 063 880 discloses a melt processable poly(ester-omide) which is capable of forming an anisotropic melt phase and is suited for the formation of molded articles, melt-extructed fibres and met-extructed films.

### Disclosure of the Invention

The present inventors made a diligent study to solve the problem and provide a wholly aromatic polyester amide having excellent stretching property and good adhesion to a heterogeneous polymer while keeping a good mechanical property and, as the result, found out that a selective combination of 4 kinds of specific monomers as starting materials in a polymer skeleton and introduction of a specific amount of a bending monomer in the starting material was effective to achieve the purpose, and completed the invention.

Namely, the invention is an amorphous wholly aromatic polyester amide exhibiting optical anisotropy at the softening and flowing, which is a wholly aromatic polyester amide obtained by copolymerizing:
(A) 4-hydroxybenzoic acid,
(B) 2-hydroxy-6-naphthoic acid,
(C) aromatic aminophenol and
(D) aromatic dicarboxylic acid, wherein
   (1) the ratio of (C) the aromatic aminophenol is from 7 to 35% by mol,
   (2) the ratio of a bending monomer among starting material monomers is from 7 to 35 % by mol,
   (3) the ratio ((A)/(B)) between (A) the 4-hydroxybenzoic acid and (B) the 2-hydroxy-6-naphthoic acid is from 0.15 to 4.0,
   (4) the ratio of isophthalic acid is at least 35% by mol or more in (D) the aromatic dicarboxylic acid,
   (5) a melting point is not observed by DSC measurement at a temperature rising rate of 20°C/min and
   (6) the glass transition temperature is from 100 to 180°C.

The invention relates to the amorphous wholly aromatic polyester amide which can be suitably used for a blow molded article. For more details, it relates to an amorphous wholly aromatic polyester amide which has excellent stretching property and good adhesion to a heterogeneous polymer and, therefore, is suitably used particularly for a multilayer film or a multilayer sheet, a multilayer blow molded article and the like.

### Embodiment of the Invention

Starting material compounds necessary for producing the wholly aromatic polyester amide constituting the invention will be described in detail in due order.

A first component as a starting material monomer to be used in the invention is (A) 4-hydroxybenzoic acid. Its derivatives are also employable. A second component is (B) 2-hydroxy-6-naphthoic acid. Its derivatives are also employable.

A third component as a starting material monomer to be used in the invention is (C) an aromatic aminophenol including, for example, p-aminophenol, p-N-methylaminophenol, 3-methyl-4-aminophenol, 2-chloro-4-aminophenol and their derivatives.

A fourth component as a starting material monomer to be used in the invention is (D) an aromatic dicarboxylic acid including, for example, terephthalic acid, isophthalic acid, phthalic acid, 4,4'-diphenyldicarboxylic acid, 2,6-naphthalene dicarboxylic acid, 2,3-naphthalene dicarboxylic acid, methylterephthalic acid, chloroterephthalic acid, and their derivatives.

In the wholly aromatic polyester amide of the invention obtained by copolymerizing the components (A) - (D), the copolymerization ratio of each component is important for expressing excellent mechanical properties and good adhesion to a heterogeneous polymer while keeping excellent stretching property, which was the desired object of the invention.

More specifically, in the wholly aromatic polyester amide of the invention, the ratio of (C) an aromatic aminophenol must be 7-35% by mol, and preferably 10-25% by mol. When less than 7% by mol, aimed adhesiveness can not be expressed, and when more than 35% by mol, an amorphous wholly aromatic polyester amide exhibiting optical anisotropy at the softening and flowing can not be obtained. Therefore, the both cases are not preferable.

In the starting material monomers, ratio of a bending monomer must be 7-35% by mol. Here, a bending monomer is a compound, among compounds having a phenylene skeleton, which can bend a molecular chain such as compounds having an ester- or amide-formable functional group (a carboxyl group, a phenol group, an amino group) at meta- or ortho-site. Specifically, a compound having a 1,3-phenylene skeleton, a 2,3-phenylene skeleton, and a 2,3-naphthalene skeleton may be mentioned.

The bending monomer includes more specifically isophthalic acid, phthalic acid, 2,3-naphthalene dicarboxylic acid and their derivatives. 3,3'-biphenyl dicarboxylic acid, 4,3'-biphenyl dicarboxylic acid and their derivatives are also included in the bending monomer. Isophthalic acid is particularly preferable.

Therefore, as (D) an aromatic dicarboxylic acid of the invention, 35 % by mol or more, particularly 100% by mol of the whole aromatic dicarboxylic acid is preferably isophthalic acid.

As a bending monomer, an aromatic hydroxycarboxylic acid such as m-hydroxybenzoic acid and salicylic acid may be introduced at a small amount (at 10% by mol or less) as the monomer other than (A), (B), (C), and (D).

The sum of (A) 4-hydroxybenzoic acid and (B) 2-hydroxy-6-naphthoic acid is generally 30-90% by mol (preferably 50-80% by mol). The ratio of (A) to (B) ((A)/(B)) must be 0.15-4.0, and preferably 0.25-3. When the ratio is outside the range, the polymer crystallizes and has undesirably bad stretching property and adhesiveness.

In the wholly aromatic polyester amide of the invention, the most desirable copolymerization ratios of (A) - (D) are as follows:
(A) 4-hydroxybenzoic acid; 20-60% by mol
(B) 2-hydroxy-6-naphthoic acid; 20-60% by mol
(C) aromatic aminophenol; 10-25% by mol
(D) aromatic dicarboxylic acid; 10-25% by mol.

The wholly aromatic polyester amide of the invention must be substantially amorphous, that is, have no melting point by DSC measurement at a temperature rising rate of 20 °C/min, and soften around the glass transition temperature. An amorphous LCP exhibits excellent stretching property since it does not crystallize during a cooling process from a molten state and keeps a molten state, and is capable of flowing before arriving at the glass transition temperature. But a crystalline polymer undesirably worsens in stretching property. Further, since a crystalline polymer worsens in adhesiveness along with the stretching property, the fact that the wholly aromatic polyester amide of the invention is substantially amorphous is an important property for obtaining a good processability in blow molding and film production.

Further, the wholly aromatic polyester amide of the invention must have a glass transition temperature in the range of 100-180 °C. The glass transition temperature of lower than 100 °C undesirably worsens heat resistance, and that of higher than 180 °C undesirably worsens stretching property and adhesiveness.

The wholly aromatic polyester amide of the invention is polymerized by a direct polymerization method or an ester exchange method and upon polymerization, a melt polymerization method, a solution polymerization method or a slurry polymerization method and the like is employed.

In the invention, an acylation agent for a polymerizing monomer or a terminal-activated monomer as an acid chloride derivative is employed upon polymerization. The acylation agent includes an acid anhydride such as acetic anhydride, and the like. The amount to be used is preferably 1.01-1.10 times, and more preferably 1.02-1.05 times the total equivalent of amino groups and hydroxyl groups from the viewpoint of polymerization control.

Various catalysts can be employed for the polymerization. Typically dialkyl tin oxide, diaryl tin oxide, titanium dioxide, alkoxy titanium silicates, titanium alcoholates, alkali or alkali earth metal carboxylates, and a Lewis acid such as BF₃. are mentioned. The amount of the catalyst to be used is generally about 0.001-1 % by weight, and preferably 0.003-0.2% by weight based on the total amount of the monomers.

When the solution polymerization or slurry polymerization is conducted, liquid paraffin, a highly heat resistant synthetic oil, or an inactive mineral oil is employed as a. solvent.

As for the reaction conditions, the reaction temperature is 200-380 °C, and the final pressure is 0.1-760 Torr (namely 13-101,080 Pa). Particularly for the melt reaction, the reaction temperature is 260-380 °C and preferably 300-360 °C, and the final pressure is 1-100 Torr (namely 133-13,300 Pa) and preferably 1-50 Torr (namely 133-6,670 Pa).

The melt polymerization is carried out, by starting pressure reduction after the reaction system reaches a prescribed temperature, at a prescribed degree of pressure reduction. After a stirrer torque arrives at a prescribed value, an inert gas is introduced and, from a state of reduced pressure via a normal pressure, the reaction system is adjusted to a prescribed pressurized state, and the polymer is discharged.

The fact that the liquid crystalline polymer exhibits optical anisotropy in a molten state is an indispensable element for having both heat stability and easy processability in the invention. Although some of the wholly aromatic polyester amides constituted of the above described units do not form an anisotropic melt phase depending on constituents and a sequence distribution in the polymer, the polymer according to the invention is limited to wholly aromatic polyester amides exhibiting optical anisotropy when they melt.

Melt-anisotropic property can be confirmed by a conventional polarimetric inspection method using crossed polarizers. More specifically, the confirmation of melt-anisotropic property is conducted by melting a sample on a hot stage made by Lincome and observing it by using a polarizing microscope made by Olympus at x150 magnification in a nitrogen atmosphere. The polymer is optically anisotropic and allows light to transmit when it is inserted between crossed polarizers. In the case where a sample is anisotropic, polarized light can transmit even when the sample is, for example, in a molten and stationary liquid.

As an index for the processability in the invention, liquid crystallinity and glass transition temperature may be considered. Whether the liquid crystallinity is exhibited or not deeply involves in the flowability in the molten state. The polyester amide of the present application indispensably exhibits liquid crystallinity in a molten state.

Generally, a nematic liquid crystalline polymer exhibits liquid crystallinity at a temperature of the melting point or higher and, after being subjected to various molding processes and then cooled down to the crystallization temperature or lower, is solidified in the shape of a molded article. However, since the amorphous polyester amide of the invention does not crystallize, the flowability thereof is kept until the temperature of the resin reaches near the glass transition temperature. Thus the resin may be a suitable material for extrusion processing such as film, sheet and blow molding. Consequently, the glass transition temperature is preferably 100 °C or higher from the viewpoint of the heat resistance of a molded article and the promotion of efficiency of a process for drying the resin pellet. But a glass transition temperature of higher than 180 °C is undesirable because adhesion of the polyester amide to another resin deteriorates in multilayer blowing and the like.

Furthermore, the melt viscosity at a shear rate of 1,000 sec⁻¹ is preferably 1×10⁶Pa S or less, and more preferably 1×10³Pa· S or less at a temperature higher than the glass transition temperature by 80-120 °C. This melt viscosity can be generally achieved by equipping liquid crystallinity.

Next, various fibrous, granular, powdery or plate-like inorganic or organic fillers may be added to the polyester amide of the invention depending on intended purposes.

As a fibrous filler, inorganic fibrous material can be mentioned, including glass fiber, asbestos fiber, silica fiber, silica-alumina fiber, alumina fiber, zirconia fiber, boron nitride fiber, silicon nitride fiber, boron fiber, potassium titanate fiber, fiber of silicate such as wollastonite, magnesium sulfate fiber, aluminum borate fiber, and a fibrous substance of metal such as stainless, aluminum, titan, copper and brass. The particularly representative fibrous filler is glass fiber. A high melting point organic fibrous substance such as polyamide, fluorocarbon resin, polyester resin, and acrylic resin may be employed.

Examples of the granular or powdery filler include carbon black, graphite, silica, powdery quartz, glass bead, milled glass fiber, glass balloon, powdery glass, silicate such as calcium silicate, aluminum silicate, kaolin, clay, diatomite and wollastonite, metal oxide such as iron oxide, titanium oxide, zinc oxide, antimony trioxide and alumina, metal carbonate such as calcium carbonate and magnesium carbonate, metal sulfate such as calcium sulfate and barium sulfate, ferrite, silicon carbide, silicon nitride, boron nitride, and various metal powders.

The plate-like filler includes mica, glass flake, talc, and various metallic foils and the like.

Examples of the organic filler include a heat resistant high strength synthetic fiber such as an aromatic polyester fiber, a liquid crystalline polymer fiber, an aromatic polyamide, and a polyimide fiber, and the like.

Each of these inorganic and organic fillers may be employed alone or by combining two or more of them. The combination of the fibrous filler and the granular or plate-like filler is particularly preferable for simultaneous possession of mechanical strength, dimensional accuracy, electric performance and the like. The amount of the inorganic filler to be compounded is 120 parts by weight or less, and preferably 20-80 parts by weight relative to 100 parts by weight of the wholly aromatic polyester amide.

When the filler is used, a sizing agent or a surface treating agent may be employed if necessary.

Other thermoplastic resins further may be subsidiarily added to the polyester amide of the invention in a range of not impairing the purpose intended by the invention.

Examples of the thermoplastic resin usable in this case include polyolefin such as polyethylene and polypropylene, aromatic polyester consisted of an aromatic dicarboxylic acid and a diol and the like such as polyethylene terephthalate and polybutylene terephthalate, polyacetal (homo or copolymer), polystyrene, polyvinyl chloride, polyamide, polycarbonate, ABS, polyphenylene oxide, polyphenylene sulfide, and fluorocarbon resin. Each of these thermoplastic resins may be employed in combination of the two or more.

The wholly aromatic polyester amide composed of specific structural units and exhibiting anisotropy at the melt state and compositions containing the same have a high viscosity in a molten state, therefore they can be easily blow-molded and melt-stretched, and efficiently and economically processed to be blow molded articles (particularly automobile-related parts such as a fuel tank), film or sheet, and fiber keeping the excellent physical properties of the crystalline polyester amide.

Further, due to the characteristics of having excellent stretching property and good adhesiveness to a heterogeneous polymer, they can be particularly suitably used for a multilayer film or a multilayer sheet produced in combination with another polymer, and a multilayer blow molded article produced in combination with another polymer. Other polymers to be used here are not specifically limited, and polyolefin, particularly a high-density polyolefin is suitable.

### Examples

The invention will be described below in more detail with reference to Examples, but shall not be limited in scope by them. Methods for measuring physical properties in the Examples are as follows:

### [Melting point and glass transition temperature]

These were measured at a temperature rising rate of 20 °C/min by a differential scanning calorimeter (DSC7; made by Perkin-Elmer).

### [Melt viscosity]

This was measured at 250 °C and at a shear rate of 1,000sec⁻¹ by a Capillograph made by Toyo Seiki using an orifice of 1mm in inner diameter and 20mm in length.

### [Melt stretch]

By using an orifice of 1mm in inner diameter and 20mm in length, the drawing-in speed (m/min) was measured when the polymer, which had been discharged from the orifice under the conditions of temperature of 250 °C and a shear rate of 36sec⁻¹, broke. The value becomes an index of stretching property.

### [Adhesive strength]

After a hot plate welding was conducted by using a 100µm sheet of the Admer NF518 made by Mitsui Chemicals as an adherent at 220 °C, a peeling test piece of 15mm in width was cut out and the maximum peeling strength was measured.

### Example 1

Starting material monomers as below, a metal catalyst at an amount of 30ppm based on K⁺ relative to a resin to be molded, and an acylation agent at an amount of 1.02 times the summed equivalent of the amino group and the hydroxyl group were charged in a polymerization vessel equipped with a stirrer, a reflux column, a monomer charge port, a nitrogen introducing port, and a depressurization/fluxion line, and nitrogen substitution was started.
(A) 4-hydroxybenzoic acid: 59.22g (20% by mol)
(B) 2-hydroxy-6-naphthoic acid: 161.38g (40% by mol)
(C) Acetoxy-4-aminophenol: 64.81g (20% by mol)
(D) Isophthalic acid: 71.23g (20% by mol.)

Potassium acetate catalyst: 22.5mg
Acetic anhydride: 178.6g

After charging the starting materials, temperature of the reaction system was raised to 140 °C to react at 140 °C for 1 hour. Then, the temperature was further raised up to 330 C by spending 3.3 hours. From that point, pressure was decreased to 10Torr (namely 1330Pa) by spending 20min and, while distilling acetic acid, excess acetic anhydride and other low boiling point materials, melt polymerization was conducted. After the stirring torque arrived at a prescribed value, nitrogen was introduced to turn from a depressurized state to a pressurized state via a normal pressure, and then polymer was discharged from the bottom of the polymerization vessel.

Then, a sheet of 100µm in thickness was prepared by using a hot press at 230 °C as an evaluation sample for an adhesion test.

The results are shown in Table 1.

### Comparative example 1

Polymerization was carried out as in Example 1, except that the kind and charge amount of starting material monomers were determined as follows:
(A) 4-hydroxybenzoic acid: 82.69g (30% by mol)
(B) 2-hydroxy-6-naphthoic acid: 112.65g (30% by mol)
(D) Isophthalic acid: 66.3g (20% by mol.) 4,4'-biphenol: 74.31g (20% by mol.)

Potassium acetate catalyst: 22.5mg
Acetic anhydride: 207.8 g

The results are shown in Table 2.

### Examples 2-10 and Comparative examples 2-6

Polymerizations were carried out as in Example 1, except that the kind and charge amount of the starting material monomers were determined as shown in Table 1-2. The results are shown in Table 1-2. In Comparative examples 3 and 4, the melting points were too high to measure the melt viscosity and other properties under the above described operation conditions. In Comparative example 5, a resin could not be polymerized.

**Table 1**

| | Examples | | | | | | | | | |
|---|---|---|---|---|---|---|---|---|---|---|
| | 1 | 2 | 3 | 4 | 5 | 6 | 7 | 8 | 9 | 10 |
| HBA (% by mol) | 20 | 40 | 40 | 30 | 26 | 34 | 20 | 40 | 40 | 40 |
| HNA (% by mol) | 40 | 20 | 40 | 30 | 34 | 26 | 20 | 30 | 30 | 30 |
| TA (% by mol) | | | | | | | | | 7.5 | 5 |
| IA (% by mol) | 20 | 20 | 10 | 20 | 20 | 20 | 30 | 15 | 7.5 | 10 |
| BP (% by mol) | | | | | | | | | | |
| APAP (% by mol) | 20 | 20 | 10 | 20 | 20 | 20 | 30 | 15 | 15 | 15 |
| Amount of bending monomer (% by mol) | 20 | 20 | 10 | 20 | 20 | 20 | 30 | 15 | 7.5 | 10 |
| Ratio of HBA/HNA | 0.50 | 2.00 | 1.00 | 1.00 | 0.76 | 1.31 | 1.00 | 1.33 | 1.33 | 1.33 |
| Glass transition temperature (°C) | 150.6 | 145.8 | 125.3 | 152.2 | 148.4 | 150.9 | 171.5 | 136.4 | 131.2 | 129.0 |
| Melting point (°C) | - | - | - | - | - | - | - | - | - | - |
| Melt viscosity (Pa s) | 312.3 | 300.5 | 244.9 | 331.7 | 329.8 | 311.9 | 501.9 | 173.1 | 316.6 | 203.4 |
| Melt stretch (m/min) | 38.0 | 33.1 | 27.4 | 32.8 | 42.8 | 31.2 | 34.5 | 66.6 | 30.5 | 56.4 |
| Adhesive strength (N/mm) | 0.99 | 1.24 | 0.75 | 1.10 | 1.02 | 1.24 | 0.85 | 0.77 | 0.35 | 0.32 |

**Table 2**

| | Comparative Examples | | | | | |
|---|---|---|---|---|---|---|
| | 1 | 2 | 3 | 4 | 5 | 6 |
| HBA (% by mol) | 30 | 30 | 35 | 60 | 10 | 40 |
| HNA (% by mol) | 30 | 30 | 35 | 10 | 10 | 30 |
| TA (% by mol) | | | 15 | | | 10 |
| IA (% by mol) | 20 | 20 | | 15 | 40 | 5 |
| BP (% by mol) | 20 | 15 | | | | |
| APAP (% by mol) | | 5 | 15 | 15 | 40 | 15 |
| Amount of bending monomer (% by mol) | 20 | 20 | 0 | 15 | 40 | 5 |
| Ratio of HBA/HNA | 1.00 | 1.00 | 1.00 | 6.00 | 1.00 | 1.33 |
| Glass transition temperature (ºC) | 129.4 | 135.8 | 128.8 | 138.0 | | 133.5 |
| Melting point (ºC) | - | - | 246.7 | 153.0 | No polymerization | - |
| Melt viscosity (Pa·s) | 36.1 | 144.2 | Unmeas- ureable ^{*1)} | Unmeasureable ^{*1)} | | 188.9 |
| Melt stretch (m/min) | 46.3 | 68.9 | | | | 24.5 |
| Adhesive strength (N/mm) | 0.24 | 0.18 | *2) | *2) | | 0.25 |

| | | | | | | |
|---|---|---|---|---|---|---|
| HBA: 4-hydroxybenzoic acid HNA: 2-hydroxy-6-naphthoic acid TA: Terephthalic acid IA: Isophthalic acid BP: 4,4'-biphenol APAP: Acetoxy-4-aminophenol *1) not melted, unmeasurable *2) The adhesive strength was tried to measure as in Example 1, except that the film was prepared at 270 °C and the welding temperature was changed to be 270 °C. But the Admer NF518 foamed to make the measurement impossible. | | | | | | |

### Example 11, Preparation of inflation film

By using a twin-extruder (PCM30, made by Ikegai Tekko KK), the polymer in Example 8 was molten and kneaded at a cylinder temperature of 230 °C, an extrusion volume of 8 kg/hr, and a rotation number of 150rpm to make pellets.

Then, the LABOPLASTMILL made by Toyo Seiki was mounted with a 25mmφ die at a die-core clearance of 0.7mm, and an inflation film was prepared at a resin temperature of 230 °C and at a die temperature of 230 °C. On this occasion, while adjusting a resin extrusion volume, a drawing-in speed and a blower wind volume, the film was made as thin as possible within a region allowing a stable membrane making, thereby a ratio between the film thickness and the die-core clearance was obtained to be an index for the stretching property.

**Table 3**

| Drawing-in speed (m/min) | Film width (mm) | Film thickness (µm) | Stretch ratio |
|---|---|---|---|
| 4 | 168 | 24 | 29.2 |
| 6 | 210 | 15 | 46.7 |
| 25 | 215 | 6 | 117 |
| 35 | 215 | 3 | 233 |

### Comparative example 7

The polymer in Comparative example 3 was molten and kneaded as in Example 8 to make pellets, except that cylinder temperature was 280 °C. The inflation film was tried to be prepared also at a resin temperature of 280 °C and at a die temperature of 280 °C. However, a condition under which stable membrane production was made possible could not be found due to breakage of thin area, since significant uneven thickness occurred even when a resin extrusion amount, a drawing-in speed and a blower wind volume were adjusted.

## Claims

1. An amorphous wholly aromatic polyester amide exhibiting optical anisotropy in a molten state, which is a wholly aromatic polyester amide obtained by copolymerizing:
(A) 4-hydroxybenzoic acid,
(B) 2-hydroxy-6-naphthoic acid,
(C) aromatic aminophenol and
(D) aromatic dicarboxylic acid, wherein
(1) the content of (C) the aromatic aminophenol is from 7 to 35% by mol,
(2) the content of at least one monomer selected from monomers having a 1,3-phenylene skeleton, monomers having a 2,3-phenylene skeleton and monomers having a 2,3-naphthalene skeleton among starting material monomers is from 7 to 35% by mol,
(3) the ratio ((A)/(B)) between (A) the 4-hydroxybenzoic acid and (B) the 2-hydroxy-6-naphthoic acid is from 0.15 to 4.0,
(4) the content of isophthalic acid is at least 35% by mol or more in (D) the aromatic dicarboxylic acid,
(5) a melting point is not observed by DSC measurement at a temperature rising rate of 20°C/min and
(6) the glass transition temperature is from 100 to 180°C.

2. The amorphous wholly aromatic polyester amide as claimed in claim 1, wherein the at least one monomer selected from monomers having a 1,3-phenylene skeleton, monomers having a 2,3-phenylene skeleton and monomers having a 2,3-naphthalene skeleton is selected from isophthalic acid, phthalic acid, 2,3-naphthalene dicarboxylic acid, and derivatives thereof.

3. The amorphous wholly aromatic polyester amide as claimed in claim 2, wherein the at least one monomer selected from monomers having a 1,3-phenylene skeleton, monomers having a 2,3-phenylene skeleton and monomers having a 2,3-naphthalene skeleton is isophthalic acid.

4. The amorphous wholly aromatic polyester amide as claimed in any one of claims 1 to 3, wherein (C) the aromatic aminophenol is p-aminophenol.

5. A fiber formed from the amorphous wholly aromatic polyester amide as claimed in any one of claims 1 to 4.

6. A film or sheet formed from the amorphous wholly aromatic polyester amide as claimed in any one of claims 1 to 4.

7. A multilayer film or multilayer sheet formed from the amorphous wholly aromatic polyester amide as claimed in any one of claims 1 to 4 and another polymer.

8. The multilayer film or multilayer sheet as claimed in claim 7, wherein the another polymer is polyolefin.

9. A blow molded article formed from the amorphous wholly aromatic polyester amide as claimed in any one of claim 1 to 4.

10. A multilayer blow molded article formed from the amorphous wholly aromatic polyester amide as claimed in any one of claims 1 to 4 and another polymer.

11. The multilayer blow molded article as claimed in claim 10, wherein the another polymer is polyolefin.

12. The multilayer blow molded article as claimed in claim 11, wherein the polyolefin is a high density polyethylene.

13. The blow molded article as claimed in any one of claims 10 to 12, wherein the blow molded article is a fuel tank.

14. The use of the amorphous wholly aromatic polyester amide as claimed in any one of claims 1 to 4 for manufacturing a multilayer film, sheet or blow molded article.

## Patentansprüche

1. Amorphes vollaromatisches Polyesteramid, das im geschmolzenen Zustand optische Anisotropie zeigt und bei dem es sich um ein vollaromatisches Polyesteramid handelt, das erhalten wird durch Copolymerisieren von:
(A) 4-Hydroxybenzoesäure;
(B) 2-Hydroxy-6-naphthoesäure;
(C) aromatischem Aminophenol und
(D) aromatischer Dicarbonsäure, wobei
(1) der Gehalt an (C), dem aromatischen Aminophenol, 7 bis 35 Mol-% beträgt;
(2) der Gehalt an wenigstens einem Monomer, das aus Monomeren mit einem 1,3-Phenylengerüst, Monomeren mit einem 2,3-Phenylengerüst und Monomeren mit einem 2,3-Naphthalengerüst ausgewählt ist, an den Ausgangsmaterialmonomeren 7 bis 35 Mol-% beträgt;
(3) das Verhältnis ((A)/(B)) zwischen (A), der 4-Hydroxybenzoesäure, und (B), der 2-Hydroxy-6-naphthoesäure, 0,15 bis 4,0 beträgt;
(4) der Gehalt an Isophthalsäure in (D), der aromatischen Dicarbonsäure, wenigstens 35 Mol-% oder mehr beträgt;
(5) bei einer DSC-Messung bei einer Temperaturanstiegsgeschwindigkeit von 20 °C/min kein Schmelzpunkt beobachtet wird; und
(6) die Glasübergangstemperatur 100 bis 180 °C beträgt.

2. Amorphes vollaromatisches Polyesteramid gemäß Anspruch 1, wobei das wenigstens eine Monomer, das aus Monomeren mit einem 1,3-Phenylengerüst, Monomeren mit einem 2,3-Phenylengerüst und Monomeren mit einem 2,3-Naphthalengerüst ausgewählt ist, aus Isophthalsäure, Phthalsäure, 2,3-Naphthalindicarbonsäure und Derivaten davon ausgewählt ist.

3. Amorphes vollaromatisches Polyesteramid gemäß Anspruch 2, wobei es sich bei dem wenigstens einen Monomer, das aus Monomeren mit einem 1,3-Phenylengerüst, Monomeren mit einem 2,3-Phenylengerüst und Monomeren mit einem 2,3-Naphthalengerüst ausgewählt ist, um Isophthalsäure handelt.

4. Amorphes vollaromatisches Polyesteramid gemäß einem der Ansprüche 1 bis 3, wobei es sich bei (C), dem aromatischen Aminophenol, um p-Aminophenol handelt.

5. Faser, gebildet aus dem amorphen vollaromatischen Polyesteramid gemäß einem der Ansprüche 1 bis 4.

6. Film oder Folie, gebildet aus dem amorphen vollaromatischen Polyesteramid gemäß einem der Ansprüche 1 bis 4.

7. Mehrschichtiger Film oder mehrschichtige Folie, gebildet aus dem amorphen vollaromatischen Polyesteramid gemäß einem der Ansprüche 1 bis 4 und einem weiteren Polymer.

8. Mehrschichtiger Film oder mehrschichtige Folie gemäß Anspruch 7, wobei das weitere Polymer ein Polyolefin ist.

9. Blasgeformter Artikel, gebildet aus dem amorphen vollaromatischen Polyesteramid gemäß einem der Ansprüche 1 bis 4.

10. Mehrschichtiger blasgeformter Artikel, gebildet aus dem amorphen vollaromatischen Polyesteramid gemäß einem der Ansprüche 1 bis 4 und einem weiteren Polymer.

11. Mehrschichtiger blasgeformter Artikel gemäß Anspruch 10, wobei das weitere Polymer ein Polyolefin ist.

12. Mehrschichtiger blasgeformter Artikel gemäß Anspruch 11, wobei das Polyolefin ein Polyethylen hoher Dichte ist.

13. Blasgeformter Artikel gemäß einem der Ansprüche 10 bis 12, wobei der blasgeformte Artikel ein Kraftstofftank ist.

14. Verwendung des amorphen vollaromatischen Polyesteramids gemäß einem der Ansprüche 1 bis 4 zur Herstellung eines mehrschichtigen Films, einer mehrschichtigen Folie oder eines mehrschichtigen blasgeformten Artikels.

## Revendications

1. Polyesteramide entièrement aromatique amorphe présentant une anisotropie optique à l'état fondu et qui est un polyesteramide entièrement aromatique obtenu par la copolymérisation :
(A) d'acide 4-hydroxybenzoïque,
(B) d'acide 2-hydroxy-6-naphtoïque,
(C) d'un aminophénol aromatique et
(D) d'un acide dicarboxylique aromatique, dans lequel
(1) la proportion d'aminophénol aromatique (C) est comprise entre 7 et 35 % molaire,
(2) la proportion d'au moins un monomère choisi parmi des monomères ayant un squelette 1,3-phénylène, des monomères ayant un squelette 2,3-phénylène et des monomères ayant un squelette 2,3-naphtalène parmi les monomères de départ est comprise entre 7 et 35 % molaire,
(3) le rapport ((A)/(B)) entre l'acide 4-hydroxybenzoïque (A) et l'acide 2-hydroxy-6-naphtoïque (B) est compris entre 0,15 et 4,0,
(4) la proportion d'acide isophtalique est d'au moins 35 % molaire ou plus dans l'acide dicarboxylique aromatique (D),
(5) aucun point de fusion n'est observé dans l'analyse par DSC à une vitesse de chauffe de 20 °C/min et
(6) la température de transition vitreuse est comprise entre 100 et 180 °C.

2. Polyesteramide entièrement aromatique amorphe selon la revendication 1, dans lequel le au moins un monomère choisi parmi des monomères ayant un squelette 1,3-prénylène, des monomères ayant un squelette 2,3-phénylène et des monomères ayant un squelette 2,3-naphtalène est choisi parmi l'acide isophtalique, l'acide phtalique, l'acide 2,3-naphtalène dicarboxylique et leurs dérivés.

3. Polyesteramide entièrement aromatique amorphe selon la revendication 2, dans lequel le au moins un monomère choisi parmi des monomères ayant un squelette 1,3-phénylène, des monomères ayant un squelette 2,3-phénylène et des monomères ayant un squelette 2,3-naphtalène est l'acide isophtalique.

4. Polyesteramide entièrement aromatique amorphe selon l'une quelconque des revendications 1 à 3, dans lequel l'aminophénol aromatique (C) est le p-aminophénol.

5. Fibre formée à partir du polyesteramide entièrement aromatique amorphe selon l'une quelconque des revendications 1 à 4.

6. Film ou feuille formé(e) à partir du polyesteramide entièrement aromatique amorphe selon l'une quelconque des revendications 1 à 4.

7. Film multicouche ou feuille multicouche formé(e) à partir du polyesteramide entièrement aromatique amorphe selon l'une quelconque des revendications 1 à 4 et d'un autre polymère.

8. Film multicouche ou feuille multicouche selon la revendication 7, dans lequel/laquelle l'autre polymère est une polyoléfine.

9. Article moulé par soufflage formé à partir du polyesteramide entièrement aromatique amorphe selon l'une quelconque des revendications 1 à 4.

10. Article multicouche moulé par soufflage formé à partir du polyesteramide entièrement aromatique amorphe selon l'une quelconque des revendications 1 à 4 et d'un autre polymère.

11. Article multicouche moulé par soufflage selon la revendication 10, dans lequel l'autre polymère est une polyoléfine.

12. Article multicouche moulé par soufflage selon la revendication 11, dans lequel la polyoléfine est un polyéthylène haute densité.

13. Article moulé par soufflage selon l'une quelconque des revendications 10 à 12, dans lequel l'article moulé par soufflage est un réservoir d'essence.

14. Utilisation du polyesteramide entièrement aromatique amorphe selon l'une quelconque des revendications 1 à 4 pour fabriquer un film ou une feuille multicouche ou encore un article moulé par soufflage.
